# FASCICULE DE BREVET EUROPEEN

(11) **EP 2 176 164 B1**
(45) Date de publication et mention de la délivrance du brevet: **27.12.2017**
(21) Numéro de dépôt: 08844804.8
(22) Date de dépôt: 08.08.2008
(51) Int. Cl.: C01B 32/20, B82Y 40/00, C01B 32/22, C01B 32/19, C01B 32/194, B82Y 30/00

(54) **Procédé de solubilisation du graphite**
Verfahren zur Solubilisierung von Graphit
Method for solubilising graphite

(30) Priorité: 09.08.2007 FR 0705803
(43) Date de publication de la demande: 21.04.2010
(60) Demande divisionnaire: 13186782.2
(73) Titulaire: Centre National de la Recherche Scientifique (C.N.R.S.), 75794 Paris Cedex 16 (FR)
(72) Inventeur: PENICAUD, Alain, F-33000 Bordeaux (FR); VALLES, Cristina, 22003-HUESCA (ES)
(74) Mandataire: Novagraaf Technologies
(86) Numéro de dépôt international: PCT/FR2008/001178
(87) Numéro de publication internationale: WO 2009/056696

(56) Documents cités:
- EP-A- 0 905 809
- WO-A-2005/073127
- FR-A- 2 652 355
- BEGUIN F ET AL: "The Reversible Intercalation of Tetrahydrofuran in some Graphite-Alkali Metal Lamellar Compounds" MATERIALS SCIENCE ENGINEERING, ELSEVIER SEQUOIA, LAUSANNE, CH, vol. 40, 1 janvier 1979 (1979-01-01), pages 167-173, XP002481409 ISSN: 0025-5416
- STANKOVICH S ET AL: "Graphene-based composite materials" NATURE, NATURE PUBLISHING GROUP, LONDON, UK, vol. 442, 20 juillet 2006 (2006-07-20), pages 282-286, XP002481410 ISSN: 0028-0836
- VICULIS L M ET AL: "A Chemical Route to Carbon Nanoscrolls" SCIENCE, US AMERICAN ASSOCIATION FOR THE ADVANCEMENT OF SCIENCE, WASHINGTON, DC, vol. 299, 28 février 2003 (2003-02-28), page 1361, XP002481411
- INAGAKI M ET AL: "Production of exfoliated graphite from potassium-graphite-tetrahydro furan ternary compounds and its applications" SYNTHETIC METALS, ELSEVIER SEQUOIA, LAUSANNE, CH, vol. 8, 1 janvier 1983 (1983-01-01), pages 335-342, XP002481412 ISSN: 0379-6779
- KOTOV N A: "Carbon sheet solutions" NATURE, NATURE PUBLISHING GROUP, LONDON, UK, vol. 442, 20 juillet 2006 (2006-07-20), pages 254-255, XP002481413 ISSN: 0028-0836
- FALCAO ET AL: "Microwave exfoliation of a graphite intercalation compound" CARBON, ELSEVIER, OXFORD, GB, vol. 45, no. 6, 27 avril 2007 (2007-04-27), pages 1367-1369, XP022052143 ISSN: 0008-6223
- WORSLEY K A ET AL: "Soluble graphene derived from graphite fluoride" CHEMICAL PHYSICS LETTERS, NORTH-HOLLAND, AMSTERDAM, vol. 445, 24 juillet 2007 (2007-07-24), pages 51-56, XP002481414 ISSN: 0009-2614
- NIYOGI S ET AL: "Solution Properties of Graphite and Graphene" JOURNAL OF THE AMERICAN CHEMICAL SOCIETY, AMERICAN CHEMICAL SOCIETY, WASHINGTON, DC. US, vol. 128, 1 janvier 2006 (2006-01-01), pages 7720-7721, XP002481415 ISSN: 0002-7863
- CHAKRABORTY S ET AL: "Functionalization of potassium graphite" ANGEWANDTE CHEMIE. INTERNATIONAL EDITION, WILEY VCH VERLAG, WEINHEIM, vol. 46, 3 mars 2007 (2007-03-03), pages 4486-4488, XP002481416 ISSN: 1433-7851
- GUÉRARD D ET AL: "Synthesis, crystallographic study and electrical conductivity of GICs with alkali metal hydrides" SYNTHETIC METALS, ELSEVIER SEQUOIA, LAUSANNE, CH, vol. 34, 1 janvier 1989 (1989-01-01), pages 27-32, XP002481417 ISSN: 0379-6779
- BEGUIN F ET AL: "New ternary lamellar compounds of graphite", CARBON, ELSEVIER, OXFORD, GB, vol. 13, no. 4, 1 August 1975 (1975-08-01) , pages 293-295, XP024031896, ISSN: 0008-6223, DOI: 10.1016/0008-6223(75)90031-7 [retrieved on 1975-08-01]

## Description

### Domaine technique

La présente invention se rapporte à un procédé de solubilisation de graphite intercalé et ses applications, notamment pour la fabrication de composites et la purification du graphène.

La présente invention se rapporte en particulier à des solutions de graphène et plans de graphènes obtenus par ledit procédé, ainsi qu'à des utilisations de ces solutions et plans de graphène.

L'obtention de graphène sous forme de solutions présente un grand intérêt pour leurs applications industrielles, en particulier pour leur mise en forme en vue d'une utilisation donnée. De telles solutions sont en effet facilement utilisables pour déposer des plans de graphène sur un substrat donné, pour former des films de graphène, ou pour élaborer, par imprégnation, des composites renfermant du graphène. Ces solutions ouvrent également la voie à la purification du graphène.

Dans la description ci-dessous, les références entre crochets ([]) renvoient à la liste des références présentée après les exemples.

### État de la technique

Le carbone est connu pour avoir quatre structures ou familles de structures cristallines uniques : le diamant, le graphite, les fullerènes et les nanotubes de carbone.

La structure tubulaire des nanotubes de carbone leur confère des propriétés mécaniques, électriques et chimiques uniques. À ce titre, ils sont couramment utilisés dans les matériaux composites (Schaffer, M. S. P., Windle, A. H., "Fabrication and Characterization of Carbon Nanotube/poly (vinyl alcohol) Composites", Adv. Mater., 11, pp 937-941 (1999) [ref 1]), les piles à combustible à hydrogène (Ye, Y., Ahn, C. C., Witham, C., Fultz, B., Liu, J., Rinzler, A. G., Colbert, D., Smith, K. A., Smalley, R. E., "Hydrogen Absorption And Cohesive Energy Of Single-Walled Carbon Nanotubes", App. Phys. Lett., 74, pp 307-2309 (1999) [ref 2],; Liu, C., Fan, Y. Y., Liu, M., Cong, H. T., Cheng, H. M., Dresselhaus, M. S., "Hydrogen Storage In Single-Walled Carbon Nanotubes At Room Temperature", Science, 286, pp 1127-1129 (1999) [ref 3]; Kong, J., Chapline, M. G., Dai, H., "Functionalized Carbon Nanotubes For Molecular Hydrogen Sensors", Adv. Mater. 13, 1384-1386 (2001) [ref 4]), les supercondensateurs (Aldissi, M.; Schmitz, B.; Lazaro, E.; Bhamidipati, M.; Dixon, B., "Conducting Polymers In Ultracapacitor Applications", 56.sup.th Annu. Tech. Conf.--Soc. Plast. Eng., (Vol. 2), pp 1197-1201 (1998) [ref 5]; An, K. H.; Kim, W. S.; Park, Y. S.; Moon, J.-M.; Bae, D. J.; Lim, S. C.; Lee, Y. S.; Lee, Y. H. "Electrochemical Properties Of High-Power Supercapacitors Using Single-Walled Carbon Nanotube Electrodes", Adv. Funct. Mater. 11, pp 387-392 (2001) [ref 6]), la catalyse (Yu, R., Chen, L., Liu, Q., Lin, J., Tan, K. -L., Ng, S. C., Chan, H. S. O., Xu, G.-Q.,Hor, T. S. A. "Platinum Deposition On Carbon Nanotubes Via Chemical Modification", Chem. Mater. 10, pp 718-722 (1998) [ref 7]; (Planeix, J. M.; Coustel, N.; Coq, B.; Brotons, V.; Kumbhar, P. S.; Dutartre, R.; Geneste, P.; Bernier, P.; Ajayan, P. M., "Application Of Carbon Nanotubes As Supports_in Heterogeneous Catalysis", J. Am. Chem. Soc. 116, pp 7935-7936 (1994) [ref 8]) et les composants ou systèmes électroniques de taille nanométrique (Tans, S. J., Verschueren, A. R. M., Dekker, C., "Room-Temperature Transistor Based On A Single Carbon Nanotube", Nature 393, pp 49-52 (1998) [ref 9]; Bachtold, A.; Hadley, P.; Nakanishi, T.; Dekker, C., "Logic Circuits With Carbon Nanotube Transistors". Science 294 pp 1317-1320 (2001) [ref 10]).

Cependant, le coût relativement élevé des nanotubes de carbone a freiné considérablement leur utilisation à l'échelle industrielle.En effet, la préparation des nanotubes de carbone s'effectue à l'heure actuelle selon trois procédés : par arc électrique à haute température, par ablation laser, et par des procédés de décomposition catalytique. La méthode par arc électrique utilise deux électrodes en graphite entre lesquelles un arc électrique est établi, l'anode se consume pour former un plasma dont la température peut atteindre 6000°C (ljima, S. "Helical Microtubules of Graphitic Carbon." Nature, 354, 56-58 (1991) [ref 11]); Ebbeson, T. W., Ajayan, P. M. "Large Scale Synthesis Of Carbon Nanotubes", Nature 358, pp 220-222 (1992) [ref 12]). L'ablation laser consiste à exposer une cible de graphite à un rayonnement laser, de forte énergie, pulsé ou continu. Le graphite est soit vaporisé, soit expulsé en petits fragments de quelques atomes (Saito et al., Chem. Phys. Lett., 1995, 236:419-426 [ref 13]) ; Thess, A.; Lee, R.; Nikolaev, P.; Dai, H.; Petit, P.; Robert, J.; Xu, C.; Lee, Y. H.; Kim, S. G.; Rinzler, A. G.; Colbert, D. T.; Scuseria, G. E.; Tomanek, D.; Fischer, J. E.;_Smalley, R. E., "Crystalline Ropes Of Metallic Carbon Nanotubes". Science 273, pp 483-487 (1996) [ref 14]). La préparation de nanotubes de carbone par décomposition d'hydrocarbures ou de composés oxygénés en présence de métaux de transition supportés a été reportée dans la littérature. La voie la plus étudiée est la décomposition catalytique du méthane principalement sur oxyde de fer (Muradov et al., Int. J. Hydrogen Energy, 1993, 18:211-215 [ref 15]), mais aussi sur Ni/SiO₂ (Ishihara et al., Chem. Lett., 1995, 2:93-94 [ref 16]).En conséquence, le prix des nanotubes de carbone est très élevé (de l'ordre de 90 dollars par gramme ou plus) (Oger, G., "French Firm Hopes To Get PR Bounce Out Of Nanotubes In Tennis Rackets", Small Times, Nov. 7, 2001, http://www.smaltimes.com/articles/article_display.cfm?ARTICLE_ID=267637& p=109) [ref 17]), ce qui limite leur utilisation à des applications de petite envergure, comme les pointes pour microscopie à effet tunnel.

Ainsi, la communauté scientifique a développé un intérêt pour un nanomatériau de carbone alternatif qui a des propriétés comparables, mais qui est plus facilement accessible et à moindre coût : le graphène.

Le graphène ou plan de base du graphite, longtemps considéré comme un objet virtuel, a récemment acquis une existence réelle depuis les travaux de Novoselov *et al.* (K. S. Novoselov, A. K. Geim, S. V. Morozov, D. Jiang, Y. Zhang, S. V. Dubonos, I. V. Grigorieva, and A. A. Firsov « Electric field effect in atomically thin carbon films », Science, 306, 666-669 (2004) [ref 18]; K. S. Novoselov, A. K. Geim, S. V. Morozov, D. Jiang, M. I. Katsnelson, I. V. Grigorieva, S. V. Dubonos, A. A. Firsov, « Two-dimensional gas of massless Dirac fermions in graphene », Nature, 438, 197 - 200 (2005) [ref 19]) qui décrivent les propriétés électroniques de cet objet singulier.

Le graphite est connu pour conduire à des composés d'intercalation (graphite intercalation compounds GIC) avec soit des donneurs soit des accepteurs d'électrons. (« Synthesis of graphite intercalation compounds », A. Hérold in Chemical physics of intercalation, A.P. Legrand et S. Flandrois Eds, NATO ASI Series, series B, Vol. 172, pp. 3-45 (1987) [ref 20]) Des composés ternaires, de formule M(THF)C₂₄ ont été obtenus dès 1965 par réduction du graphite par un sel d'alcalin d'une molécule polyaromatique, dans le THF. (C. Stein, J. Poulenard, L. Bonnetain, J. Golé, C.R. Acad. Sci. Paris 260, 4503 (1965) [ref 21]). Un procédé comprenant la réduction du graphite par un métal alcalin conduisant à un composé d'intercalation du graphite en présence de THF a été publié (F. Beguin, R. Setton, A. Hamwi, and P Touzain, « The Reversible Intercalation of Tetrahydrofuran in some Graphite-Alkali Metal Lamellar Compounds », Materials Science Engineering, Elsevier Sequoia, Lausanne, vol. 40, pages 167-173). Ce procédé permet d'obtenir des composés d'intercalation du graphite sous la forme d'un composé ternaire de structure M(Solv)_{y}Cₓ (x compris entre 6 et 200, y compris entre 0 et 4) dans laquelle M est un ion métallique alcalin, Solv est une molécule de solvant nucléophile et aprotique tel que le THF.

Depuis 2004 et la publication de Novesolov et coll., le monde de la physique se passionne pour les propriétés électroniques du graphène ou plan isolé de graphite (Electric field effect in atomically thin carbon films, Novoselov et coll. Science 306, 666 (2004) [ref 22]). La méthode d'exfoliation par cisaillement de Novesolov *et coll.* ne permet d'obtenir que quelques plans isolés. De plus ces plans sont stabilisés sur une surface, ce qui empêche de les manipuler ultérieurement, en les intégrant à une matrice par exemple.

Cependant, il n'existe actuellement aucune méthode de solubilisation du graphite, et les solutions de graphène en tant que telles restent à ce jour encore élusives.

Quelques tentatives de solubilisation ont été rapportées , principalement par fonctionnalisation du graphite (Chakraborty et al., « Functionalization of potassium graphite », Angew. Chem. Int. Ed., 46, 4486-4488 (2007) [ref 23]) ou d'oxyde de graphite. (Niyogi, S.; Bekyarova, E.; Itkis, M. E.; McWilliams, J. L.; Hamon, M. A.; Haddon, R. C., "Solution Properties of Graphite and Graphene", J. Am. Chem. Soc., 128, 7720-7721 (2006) [ref 24] ; McAllister, M. J.; Li, J.-L.; Adamson, D. H.; Schniepp, H. C.; Abdala, A. A.; Liu, J.; Herrera-Alonso, M.; Milius, D. L.; Car, R.; Prud'homme, R. K.; Aksay, I. A., "Single Sheet Functionalized Graphene by Oxidation and Thermal Expansion of Graphite", Chem. Mater., 2007; ASAP Article [ref 25]).

Ces méthodes présentent toutefois l'inconvénient que les plans de graphite obtenus sont fonctionnalisés et dénaturés.

Il existe donc un réel besoin d'un procédé de solubilisation du graphite palliant ces défauts, inconvénients et obstacles de l'art antérieur, en particulier d'un procédé permettant d'obtenir des solutions de graphène facilement utilisables pour la mise en forme du graphène pour une utilisation donnée, de réduire les coûts de fabrication de matériaux composites et d'améliorer l'accessibilité du graphène en grande quantité et de pureté élevée.

### Description de l'invention

La présente invention a précisément pour but de répondre à ce besoin en fournissant un procédé de solubilisation du graphite caractérisé en ce qu'il comprend les étapes suivantes réalisées sous atmosphère inerte:
a) Réduction du graphite par un métal alcalin pour conduire à un composé d'intercalation du graphite; et
b) Exposition dudit composé d'intercalation du graphite à un solvant polaire aprotique pour conduire à une solution de graphène réduit.

Selon l'invention, le métal alcalin peut être tout métal alcalin permettant de mettre en oeuvre la présente invention. Il peut être choisi par exemple dans le groupe comprenant le lithium, le sodium, le potassium, le rubidium et le césium. Plus particulièrement, le métal alcalin peut être le lithium, le sodium ou le potassium. De préférence, le métal alcalin est le potassium.

Par « réduction par un métal alcalin» on entend dans la présente une réduction dans laquelle un métal alcalin est impliqué. Ainsi, la réduction peut se faire directement en présence d'un métal alcalin, par exemple en phase vapeur. Des méthodes de réduction en présence d'un métal alcalin sont bien connues dans l'art. L'homme du métier saura identifier les conditions opératoires adéquates pour mettre en oeuvre un procédé de réduction en présence d'un métal alcalin, par exemple en phase vapeur. Notamment, l'homme du métier pourra s'inspirer des méthodes décrites dans « Synthesis of graphite intercalation compounds », A. Hérold in Chemical physics of intercalation, A.P. Legrand et S. Flandrois Eds, NATO ASI Series, series B, Vol. 172, pp. 3-45 (1987) par exemple [ref 20].

Dans un autre mode de réalisation, la réduction se fait en présence d'un sel de métal alcalin obtenu à partir d'un métal alcalin. Par exemple, la réduction peut se faire en présence d'un sel polyaryl alcalin de formule A⁺B⁻, dans laquelle A⁺ représente un cation d'un ion alcalin, et B⁻ représente un anion d'un composé polyaromatique.De tels sels polyaryl alcalin et leur procédé de fabrication sont décrits par exemple dans (C. Stein, J. Poulenard, L. Bonnetain, J. Golé, C.R. Acad. Sci. Paris 260, 4503 (1965) [ref 21]; « Synthesis of graphite intercalation compounds », A. Hérold in Chemical physics of intercalation, A.P. Legrand et S. Flandrois Eds, NATO ASI Series, series B, Vol. 172, pp. 3-45 (1987) [ref 20]; F. Béguin et R. Setton New ternary lamellar compounds of graphite, Carbon 13, 293-)295 (1975) [ref 41].

Selon un mode de réalisation, le composé polyaromatique est choisi dans le groupe comprenant le naphtalène, la benzophénone, la fluorénone, la benzoquinone et l'anthraquinone. Dans un mode de réalisation particulier, le composé polyaromatique est le naphtalène. Dans un mode de réalisation particulier, le sel polyaryl alcalin est un sel polyaryl de potassium (c'est-à-dire, un sel de formule A⁺B⁻, dans laquelle A⁺ représente K⁺). Avantageusement, le sel polyaryl alcalin de formule A⁺B⁻, est un sel de potassium de naphthalene (Naph⁻ K⁺).

Dans un autre mode de réalisation, la réduction se fait par électrochimie où le graphite est utilisé comme cathode et le métal alcalin se présente sous la forme d'un sel d'alcalin. La réduction électrochimique du graphite est accompagnée de l'insertion des ions alcalins présents dans la solution.

Par « composé d'intercalation du graphite» ou « GIC » pour « Graphite Intercalation Compound » on entend dans la présente un composé comprenant au moins deux plans individuels de graphène chargés négativement ou positivement et intercalés par des contre ions positifs ou négatifs. Les sels d'alcalins de graphite sont un cas particulier de GIC ou les plans de graphène sont chargés négativement et les contre-ions sont des ions alcalins. Le GIC peut se présenter sous la forme d'un composé binaire de formule MCₓ où M représente un contre-ion positif d'un métal alcalin (M⁺), et x représente un nombre entier compris entre 6 et 200. En particulier, le métal alcalin peut être le potassium. Par exemple, le GIC peut être un composé binaire de formule KC₈.

Dans un autre mode de réalisation, Le GIC peut se présenter sous la forme d'un composé ternaire de formule M(Solv)_{y}Cₓ dans laquelle M est un ion métallique alcalin (M⁺), Solv est une molécule de solvant aprotique, x représente un nombre entier compris entre 6 et 200, et y représente un nombre entier compris entre 0 et 4. La molécule de solvant peut être une molécule d'un solvant aromatique (par exemple le benzène ou le toluène) ou nucléophile (par exemple, un solvant dont la structure contient au moins un atome d'oxygène comme le THF). Par exemple, le GIC peut être un composé ternaire de formule K(THF)C₂₄ ou K(THF)₂C₂₄.

Par «graphène réduit», on entend dans la présente un ou plusieurs plans de graphène individuel(s) chargé(s) négativement. La charge négative est délocalisée sur les atomes de carbone formant le plan de graphène.

Selon un mode de réalisation particulier, l'étape de réduction a) se fait en présence d'un solvant. Par exemple, le solvant peut être un solvant nucléophile. Par exemple, le solvant nucléophile peut être un solvant aprotique dont la structure contient au moins un atome d'oxygène, en particulier le THF.

Selon un mode de réalisation particulier, le composé d'intercalation du graphite se présente sous la forme d'un composé binaire de formule MCₓ où M représente un contre-ion positif d'un métal alcalin (M⁺), et x représente un nombre entier compris entre 6 et 200. En particulier, le métal alcalin peut être le potassium. Par exemple, le composé d'intercalation du graphite peut être un composé binaire de formule KC₈.

Selon un mode de réalisation particulier, le composé d'intercalation du graphite se présente sous la forme d'un composé ternaire de structure M(Solv)_{y}Cₓ dans laquelle M est un ion métallique alcalin, Solv est un solvant nucléophile dont la structure contient au moins un atome d'oxygène, x représente un nombre entier compris entre 6 et 200, et y représente un nombre entier compris entre 0 et 4. En particulier, le métal alcalin est le potassium, le solvant est le THF et le composé d'intercalation du graphite est un composé ternaire de structure K(THF)_{y}Cₓ dans laquelle x représente un nombre entier compris entre 6 et 200, et y représente un nombre entier compris entre 0 et 4. Dans un mode de réalisation particulier, le composé d'intercalation du graphite est un composé ternaire de structure K(THF)C₂₄ ou K(THF)₂C₂₄.

Selon un mode de réalisation particulier, l'étape de réduction est choisie dans le groupe comprenant la réduction par un métal alcalin en phase vapeur suivie d'une exposition à un solvant aprotique, la réduction électrochimique et la réduction par un sel polyaryl alcalin dans un solvant aprotique. Par exemple, le solvant peut être un solvant aromatique, tel que le benzène ou le toluène. Le solvant peut être un solvant aprotique dont la structure contient au moins un atome d'oxygène comme le THF.

Selon un mode de réalisation particulier, l'étape de réduction a) comprend l'addition au graphite, sous atmosphère inerte, d'un sel polyaryl alcalin de formule A⁺B⁻, dans laquelle :
A⁺ représente un cation d'un ion alcalin, et
B⁻ représente un anion d'un composé polyaromatique.

Selon un mode de réalisation, le composé polyaromatique est choisi dans le groupe comprenant le naphtalène, la benzophénone, la fluorénone, la benzoquinone et l'anthraquinone. Le solvant polaire aprotique utilisé dans l'étape de mélange b) a une constante diélectrique de 25 à 200.

Le solvant polaire aprotique utilisé dans l'étape de mélange b) peut répondre à la structure (I) suivante: 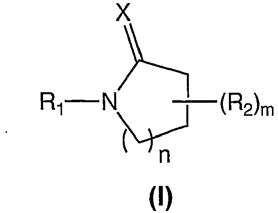 dans laquelle n et m sont indépendamment 1 ou 2;
X représente O ou S :
R₁ représente H, un groupe alkyle en C₁ à C₆ ou alkenyle en C₂ à C₆ linéaire ou ramifié, ou un groupe cycloalkyle en C₃ à C₆ ou cycloalkenyle en C₅ à C₆; et
R₂ représente H, un halogène, un groupe alkyle en C₁ à C₆ ou alkenyle en C₂ à C₆ linéaire ou ramifié, un groupe cycloalkyle en C₃ à C₆ ou cycloalkenyle en C₅ à C₆, ou un groupe -OR dans lequel R représente un groupe alkyle en C₁ à C₆ ou alkenyle en C₂ à C₆ linéaire ou ramifié, un groupe cycloalkyle en C₃ à C₆ ou cycloalkenyle en C₅ à C₆ .

Avantageusement, dans le solvant polaire aprotique de formule (I), R₁ représente un groupe alkyle en C₁ à C₆ ou alkenyle en C₂ à C₆ linéaire ou ramifié, ou un groupe cycloalkyle en C₃ à C₆ ou cycloalkenyle en C₅ à C₆.

Le solvant polaire aprotique utilisé dans l'étape de mélange b) peut répondre à la structure (I^{A}) : 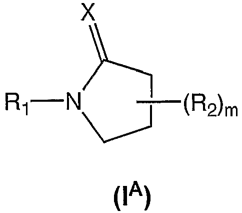 dans laquelle X, m, R₁ et R₂ sont tels que définis ci-dessus.

Avantageusement, dans le solvant polaire aprotique de formule (I^{A}), R₁ représente un groupe alkyle en C₁ à C₆ ou alkenyle en C₂ à C₆ linéaire ou ramifié, ou un groupe cycloalkyle en C₃ à C₆ ou cycloalkenyle en C₅ à C₆.

Avantageusement, dans le solvant polaire aprotique de formule (I^{A}) :
X représente O ou S; et/ou
R₁ représente un groupe alkyle en C₁ à C₄ ou alkenyle en C₂ à C₃ linéaire ou ramifié, ou un groupe cycloalkyle en C₅ à C₆ ou cycloalkenyle en C₅ à C₆; et/ou
m est 1 ; et/ou
R₂ représente H, un halogène, ou un groupe alkyle en C₁ à C₄ linéaire ou ramifié.

Par exemple, dans le solvant polaire aprotique de formule (I^{A}), R₁ représente méthyle, éthyle, n-propyle, vinyle ou cyclohexyle.

Par exemple, le solvant polaire aprotique répond à la formule suivante : 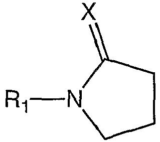 dans laquelle X représente O ou S, et R₁ représente un groupe alkyle en C₁ à C₆ ou alkenyle en C₂ à C₆ linéaire ou ramifié, ou un groupe cycloalkyle en C₃ à C₆ ou cycloalkenyle en C₅ à C₆. Par exemple, R₁ représente un groupe alkyle en C₁ à C₄ ou alkenyle en C₂ à C₃ linéaire ou ramifié, ou un groupe cycloalkyle en C₅ à C₆ ou cycloalkenyle en C₅ à C₆. Par exemple, R₁ représente méthyle, éthyle, n-propyle, vinyle ou cyclohexyle.

Par exemple, dans le solvant polaire aprotique de formule (I^{A}) X représente O et le solvant polaire aprotique utilisé dans l'étape b) est la N-méthyl-2-pyrrolidinone (NMP), la N-éthyl-2-pyrrolidinone, la N-cyclohexyl-2-pyrrolidinone ou la N-vinyl-2-pyrrolidinone.

Selon un mode de réalisation, dans le solvant polaire aprotique de formule (I^{A}) X représente S et le solvant polaire aprotique utilisé dans l'étape b) est la N-méthyl-2-pyrrolidinethione, la N-éthyl-2-pyrrolidinethione, la N-cyclohexyl-2-pyrrolidinethione ou la N-vinyl-2-pyrrolidinethione.

Le solvant polaire aprotique utilisé dans l'étape de mélange b) peut répondre à la structure (I^{B}) : 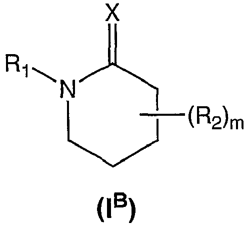 dans laquelle m représente 1 ou 2;
X représente O ou S :
R₁ représente H, un groupe alkyle en C₁ à C₆ ou alkenyle en C₂ à C₆ linéaire ou ramifié, ou un groupe cycloalkyle en C₃ à C₆ ou cycloalkenyle en C₅ à C₆; et
R₂ représente H, un halogène, un groupe alkyle en C₁ à C₆ ou alkenyle en C₂ à C₆ linéaire ou ramifié, un groupe cycloalkyle en C₃ à C₆ ou cycloalkenyle en C₅ à C₆, ou un groupe -OR dans lequel R représente un groupe alkyle en C₁ à C₆ ou alkenyle en C₂ à C₆ linéaire ou ramifié, un groupe cycloalkyle en C₃ à C₆ ou cycloalkenyle en C₅ à C₆.

Avantageusement, dans le solvant polaire aprotique de formule (I^{B}), R₁ représente un groupe alkyle en C₁ à C₆ ou alkenyle en C₂ à C₆ linéaire ou ramifié, ou un groupe cycloalkyle en C₃ à C₆ ou cycloalkenyle en C₅ à C₆.

Avantageusement, dans le solvant polaire aprotique de formule (I^{B}) :
X représente O ou S; et/ou
R₁ représente un groupe alkyle en C₁ à C₄ ou alkenyle en C₂ à C₃ linéaire ou ramifié, ou un groupe cycloalkyle en C₅ à C₆ ou cycloalkenyle en C₅ à C₆; et/ou
m est 1 ; et/ou
R₂ représente H, un halogène, ou un groupe alkyle en C₁ à C₄ linéaire ou ramifié.

Par exemple, dans le solvant polaire aprotique de formule (I^{B}), R₁ représente méthyle, éthyle, n-propyle, vinyle ou cyclohexyle.

Par exemple, lé solvant polaire aprotique répond à l'une des formules suivantes : 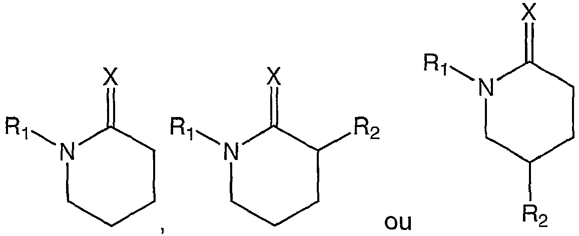 dans lesquelles X représente O ou S ; R₁ représente un groupe alkyle en C₁ à C₆ ou alkenyle en C₂ à C₆ linéaire ou ramifié, ou un groupe cycloalkyle en C₃ à C₆ ou cycloalkenyle en C₅ à C₆; et R₂ représente H, un halogène, un groupe alkyle en C₁ à C₆ ou alkenyle en C₂ à C₆ linéaire ou ramifié, un groupe cycloalkyle en C₃ à C₆ ou cycloalkenyle en C₅ à C₆, ou un groupe -OR dans lequel R représente un groupe alkyle en C₁ à C₆ ou alkenyle en C₂ à C₆ linéaire ou ramifié, un groupe cycloalkyle en C₃ à C₆ ou cycloalkenyle en C₅ à C₆. Par exemple, R₁ représente un groupe alkyle en C₁ à C₄ ou alkenyle en C₂ à C₃ linéaire ou ramifié, ou un groupe cycloalkyle en C₅ à C₆ ou cycloalkenyle en C₅ à C₆; et R₂ représente H, un halogène, ou un groupe alkyle en C₁ à C₄ linéaire ou ramifié. Par exemple, R₁ représente méthyle, éthyle, n-propyle, vinyle ou cyclohexyle ; et R₂ représente H, méthyle, éthyle, n-propyle, vinyle ou cyclohexyle. Par exemple, R₁ et R₂ sont identiques. Par exemple, R₁ et R₂ sont différents. Par exemple, R₁ et R₂ représentent un groupe méthyle.

Par exemple, dans le solvant polaire aprotique de formule (I^{B}), X représente O et le solvant polaire aprotique utilisé dans l'étape b) est la N-méthyl-2-piperidinone, la 1,3-diméthyl-2-piperidinone, la 1,5-diméthyl-2-piperidinone, la N-éthyl-2-piperidinone, la N-propyl-2-piperidinone, la N-cyclohexyl-2-piperidinone ou la N-vinyl-2-piperidinone.

Selon un mode de réalisation, dans le solvant polaire aprotique de formule (I^{B}), X représente S et le solvant polaire aprotique utilisé dans l'étape b) est la N-méthyl-2-piperidinethione, la 1,3-diméthyl-2-piperidinethione, la 1,5-diméthyl-2-piperidinethione, la N-éthyl-2-piperidinethione, la N-propyl-2-piperidinethione, la N-cyclohexyl-2-piperidinethione ou la N-vinyl-2-piperidinethione.

Par exemple, le solvant polaire aprotique peut être la N-méthylpyrrolidone ou le sulfolane. Dans un mode de réalisation particulier, le solvant polaire aprotique est la N-méthylpyrrolidone (NMP).

Dans ce document, les termes « N-méthylpyrrolidone », « N-méthyl-2-pyrrolidone » et « NMP» sont interchangeables et désignent tous le même solvant de formule :

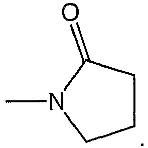

Selon un mode de réalisation particulier, l'étape de mélange b) est effectuée à une température de -22 à 202 °C. Par exemple, l'étape de mélange b) est effectuée à une température de 20 à 25°C.

D'une manière générale, le procédé de l'invention, en particulier l'étape de mélange b), peut être mis en oeuvre avec ou sans agitation. Lorsqu'un système d'agitation est utilisé, il peut s'agir d'un système d'agitation mécanique, magnétique ou par sonication. Dans un mode de réalisation particulier, le procédé est effectué sous agitation mécanique. Dans un autre mode de réalisation, le procédé est effectué sous agitation magnétique.

Il est à noter que bien que le procédé de l'invention puisse être mis en oeuvre avec un système d'agitation comprenant la sonication, celle-ci n'est nullement nécessaire. D'ailleurs, un avantage notable du présent procédé est qu'il repose sur une méthode de dissolution douce, à partir de graphite neutre, qui donne précisément la possibilité d'éviter tout recours à la sonication. Ainsi, le procédé de l'invention permet d'obtenir des plans de graphène de grande taille.

Selon un mode particulier de mise en oeuvre du procédé de la présente invention, on peut appliquer après l'étape (a) et avant l'étape (b), une étape (a1) de filtration. Par exemple, lorsque l'étape (a) du procédé implique une réduction en présence d'un sel de métal alcalin obtenu à partir d'un métal alcalin, la filtration peut permettre de séparer la phase liquide (par exemple une solution de K+Napht- dans du THF) de la phase solide comprenant le composé d'intercalation du graphite et éventuellement du graphite non réduit. Le graphite intercalé avec un métal alcalin ainsi obtenu peut être rincé une ou plusieurs fois avec un solvant adéquat. Par exemple, après l'étape de filtration (a1), le composé d'intercalation du graphite peut être rincé avec le même solvant utilisé lors de l'étape (a), notamment le THF. Le composé d'intercalation du graphite ainsi rincé peut être éventuellement séché avant l'étape (b).

Selon un mode de réalisation particulier, le procédé comprend en outre une étape de centrifugation (b1), celle-ci permettant de séparer toute fraction non dissoute de la solution de graphène réduit après l'étape (b). L'homme du métier saura déterminer les conditions de centrifugation adéquates pour obtenir une solution de graphène réduit limpide, c'est-à-dire ne comprenant pas d'agrégats détectables. Par exemple, la centrifugation peut être effectuée entre 100 et 200000 g , pendant 0.1 à 24 heures. Dans un mode de réalisation particulier, l'étape de centrifugation est effectuée à 2800 g pendant 1 heure.

Selon un mode de réalisation, la présence d'agrégats dans la solution au cours de la centrifugation est vérifiée à l'oeil nu. Ainsi, un échantillon de la solution peut être prélevé à différents intervalles dans l'étape de centrifugation pour déterminer lorsque celle-ci aura permis d'obtenir une solution limpide (c'est-à-dire sans agrégats visibles à l'oeil nu). L'examen à l'oeil nu permet de détecter des agrégats éventuels ayant une taille minimale de l'ordre du 10ième de millimètre (100 microns).

Selon un mode de réalisation, la présence d'agrégats dans la solution au cours de la centrifugation est vérifiée par microscope optique. Ainsi, un échantillon de la solution peut être prélevé à différents intervalles dans l'étape de centrifugation pour déterminer lorsque celle-ci aura permis d'obtenir une solution limpide (c'est-à-dire sans agrégats visibles au microscope optique). L'examen au microscope optique permet de détecter des agrégats éventuels ayant une taille minimale de l'ordre du micron. Dans un mode de réalisation particulier, l'échantillon de la solution peut être analysé au microscope optique avec un grossissement de 20 à 100.

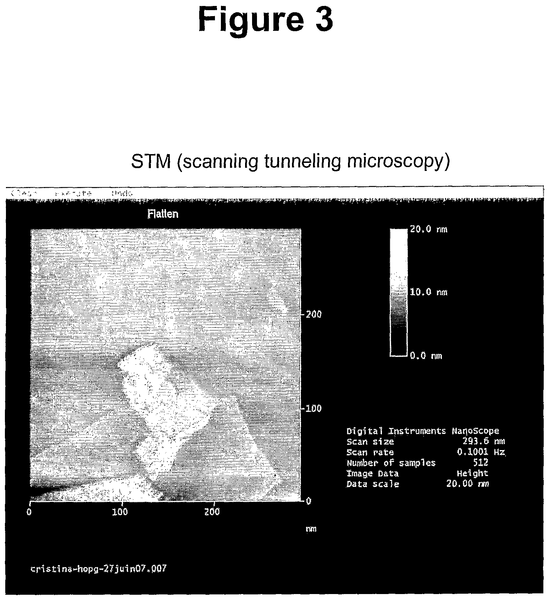

Selon un mode de réalisation particulier, le procédé comprend en outre une étape de dépôt de plans de graphène réduit sur un substrat donné. De préférence, ce dépôt est effectué sous atmosphère inerte. Une fois le dépôt effectué et le solvant éliminé, le substrat peut être exposé à l'air librement : les plans de graphène sont alors en interaction avec la surface et restent stabilisés sur la surface après réoxydation vers l'état neutre (voir Figure 3).

Le dépôt de graphène peut se faire par simple dépôt d'une quantité de solution de graphène sur un substrat, suivi de l'évaporation du solvant polaire aprotique utilisé dans l'étape (b) afin d'isoler les plans de graphène. Par exemple, la solution de graphène réduit de l'invention peut être déposée sur un substrat donné, et le solvant évaporé sous atmosphère inerte. Des plans de graphène déposés sur le substrat peuvent ainsi être obtenus, une fois le solvant polaire aprotique évaporé.

Le dépôt de graphène peut également être effectué par dépôt par application, par exemple avec un pinceau ou autre instrument permettant le dépôt d'un film de solution de graphène sur un substrat donné.

Le dépôt de graphène peut également être effectué par dépôt par trempage (« dip-coating »). Par exemple, le substrat peut être trempé dans la solution de graphène un certain temps afin de permettre l'adsorption des plans de graphène sur la surface du substrat. Le substrat est ensuite retiré de la solution, de préférence à une vitesse uniforme pour obtenir un revêtement uniforme, et le solvant est évaporé.

Le dépôt de graphène peut également être mis en oeuvre par dépôt à la tournette (« spin coating »). Par exemple, une goutte de solution de graphène peut être déposée sur un substrat en rotation, éventuellement à haute température. De préférence, la vitesse de rotation est maintenue constante durant le processus de façon à obtenir un dépôt uniforme, et le solvant est évaporé. Lorsque le dépôt à la tournette est effectué à haute température, ladite température peut être entre 10 et 200 °C.

Le dépôt de graphène peut également être mis en oeuvre par dépôt et séchage d'une goutte de solution (« drop-casting»). Par exemple, une goutte de solution de graphène peut être déposée sur un substrat. La goutte de solvant est ensuite évaporée, éventuellement à une température élévée en fonction du solvant à évaporer.

De telles méthodes sont connues de l'homme du métier, qui saura adapter les conditions de mise en oeuvre en fonction des paramètres tels que la nature du substrat, les interactions entre le substrat et les plans de graphène, la mouillabilité du substrat par le solvant, et autres paramètres dont l'homme du métier reconnaîtra la pertinence.

Les substrats susceptibles d'être utilisés comprennent de manière non exhaustive les céramiques, les métaux, le verre, la silice, la molybdénite (MoS2), le mica, le graphite et/ou les plastiques. Dans un mode de réalisation, le substrat peut être tout substrat connu, utilisé et/ou adapté pour le dépôt de nanotubes de carbone ou de plans de graphène. Par exemple, le substrat peut être du HOPG (highly oriented pyrolytic graphite), Si/SiO₂, mica ou MoS₂.

Dans un mode de réalisation particulier, le substrat peut être fonctionnalisé ou modifié avant dépôt du graphène. En effet, le procédé selon l'invention implique la dissolution d'un composé d'intercalation du graphite obtenu par réduction du graphite par un métal alcalin (étape b)). Ledit composé d'intercalation du graphite est constitué de plans de graphène chargés négativement intercalés par des cations de métal alcalin. Ainsi, le graghène dissous dans un solvant polaire aprotique selon le procédé de l'invention existe sous forme de feuillets chargés négativement. Des interactions électrostatiques peuvent intervenir entre les feuillets de graphène et le substrat lors du dépôt, en fonction de l'état de surface du substrat. En particulier, des interactions défavorables peuvent se produire si le substrat comprend des charges négatives en surface.

Par exemple, la modification de la surface du substrat peut être effectuée en exposant ledit substrat à une solution ionique contenant des cations susceptibles de participer à un échange ionique avec les cations de métal alcalin présents sur les faces exfoliées des feuillets de graphène réduit, et entraînant ainsi une polarisation positive de la surface du substrat lorsque celle-ci est mise en contact avec la solution de graphène réduit obtenue à l'étape b). Par exemple, la surface du substrat peut être modifiée par trempage (« dip-coating ») dans ladite solution ionique. Le substrat peut être ensuite séché pour évaporer le solvant de la solution ionique, avant dépôt de la solution de graphène réduit.

L'homme du métier saura sélectionner les solutions ioniques adéquates pour ce faire, et pourra se référer par exemple à III et al., Biophys. J ;, 1993, 64 : 919-924 [ref 46] pour un exemple de mise en oeuvre de ce concept.

Par exemple, lorsque le métal alcalin de l'étape a) est le potassium, on pourra utiliser une solution aqueuse de NiCl₂. Après trempage (« dip-coating ») du substrat dans ladite solution de NiCl₂, le substrat peut être séché (par exemple sous vide, éventuellement en élevant la température pour favoriser l'évaporation de l'eau). Ainsi, après dépôt de la solution de graphène réduit, les ions Ni²⁺ préalablement déposés sur la surface du substrat peuvent participer à un échange ionique avec les ions potassium (K+) présents sur les faces exfoliées des feuillets de graphène réduit obtenu à l'étape b).

Le substrat peut également être modifié par dépot d'une couche monomoléculaire d'un composé afin d'obtenir une surface hydrophobe. Par exemple, le substrat (e.g., mica) peut être recouvert d'une couche de polylysine selon des protocoles largement connus de l'homme du métier.

D'autres types de modifications de surface des substrats sont également envisageables. En général, on pourra avoir recours à toute méthode de modification de surface connue de l'homme du métier. Le choix du type de modification dépendra de la nature du substrat, du solvant polaire aprotique utilisé pour solubiliser le graphène, et des interactions physicochimiques recherchées au niveau de la surface du substrat pour améliorer la qualité des dépôts de graphène.

Les étapes a) et b) du procédé sont toujours effectuées sous atmosphère inerte. Par « atmosphère inerte », on entend par la présente un gaz ou un mélange gazeux qui ne favorise pas la ré-oxydation des plans de graphène réduit en plans de graphène neutre. Par exemple, le procédé est conduit sous atmosphère gazeuse dépourvue d'oxygène. En particulier, le procédé peut être effectué sous atmosphère d'argon ou d'azote.

Le procédé décrit dans la présente résout les problèmes majeurs actuels au développement de la recherche dans le domaine du graphène : le manque d'échantillons et les difficultés d'applications.

Depuis 2004, le graphène a conduit à de très nombreux travaux du fait de l'intérêt suscité par ses propriétés électroniques. [ref 18, ref 19] La grande majorité de ces travaux, cependant, est théorique du fait de la difficulté à préparer des échantillons. D'autre part, des premières pistes vers des matériaux composites ont été rapportées, par réduction d'oxyde de graphite. (Stankovitch et al., Nature, 2006, 442, 282-286 [ref 31]).

Les inventeurs de la présente sont les tout premiers à avoir réalisé un procédé de dissolution du graphite. D'un point de vue industriel, il est clair que cette possibilité d'obtenir des solutions de graphène est une donnée importante dans l'industrie des nanotechnologies et des matériaux composites car elle est cruciale pour le bon développement des progrès techniques dans ce domaine.

Dans un mode de mise en oeuvre particulier, les inventeurs de la présente ont réussi pour la première fois à obtenir l'exfoliation spontanée de graphite intercalé par dissolution dans la NMP. Cette découverte ouvre ainsi deux voies prometteuses pour le domaine du graphène : la disponibilité de solutions de plans de graphène ouvre de vastes perspectives pour la préparation de matériaux composites par mélange avec des polymères ou polymérisation in situ dans la solution de graphène. Les dépôts de plans de graphène sur un substrat, facilement faisables à grande échelle grâce à la présente découverte, peuvent désormais devenir une routine et permettre une véritable exploration de l'électronique du graphène moyennant des dépôts contrôlés par auto-assemblage, dépôt sous champ, etc....

Comme illustré dans l'Exemple 1 qui suit, un GIC ternaire de formule K(THF)_{y}Cₓ a été obtenu en réduisant du graphite dans une solution du sel de naphtalène de potassium (K⁺Naph⁻) dans le THF, sous atmosphère inerte. Le GIC ainsi obtenu, a été isolé par filtration, rincé et séché, et a été dissout dans la N-méthyl pyrrolidone (NMP). Après élimination des agrégats insolubles par centrifugation, une solution est obtenue. Dans l'Exemple 1, cette solution de couleur rouge est constituée de plans de graphène réduit, dissous dans le solvant considéré. Si cette solution est exposée à l'air, elle vire rapidement au jaune paille puis, en l'espace de quelques jours, devient incolore en l'espace de quelques jours.

En général, ces solutions sont colorées et contiennent des plans de graphène réduit, dissous dans le solvant considéré. Lorsque ces solutions sont exposée à l'air, elles deviennent incolores, par exemple en l'espace de quelques jours.

Cette découverte va à l'encontre des préjugés de l'art selon lesquels l'homme du métier considérait le graphite comme un matériau trop stable pour être dissous en solution. L'originalité du procédé de la présente demande réside en partie à avoir pensé à essayer de dissoudre les composés d'intercalation du graphite dans des solvants polaires. En plus de trente ans de recherches expérimentales sur le graphène, ceci n'avait jamais été envisagé ou considéré viable.

Par séchage de ladite solution de graphène dans la NMP sur un substrat, toujours sous atmosphère inerte, un dépôt de plans graphitiques (plans de graphène réduit) est obtenu. Ceux-ci peuvent trouver des applications dans le domaine de l'électronique ou optoélectronique.

Après séchage, ce dépôt peut être exposé à l'air. La Figure 3 représente une image de microscopie à effet tunnel (STM) de basse résolution de la solution dans le NMP, séchée et oxydée. On observe de petites plaquettes déposées sur le substrat. Ces plaquettes ont des angles caractéristiques multiples de 30° que l'on attend si l'on tente de couper un plan de graphène selon une rangée d'atomes de carbone. De plus, les mesures de hauteur montrent une majorité d'objets avec une hauteur de 0.35 nm et quelques-uns avec des hauteurs double ou triples. Cela correspond exactement à la hauteur attendue, la distance interplans dans le graphite étant de 0.34 nm. (Bernai, J. D. , Proc. Roy. Soc., A, 106, 749, (1924) [ref 35] ; Freise, E.J. «Structure of graphite », Nature (London) 193, 671-672, (1962) [ref 36]).

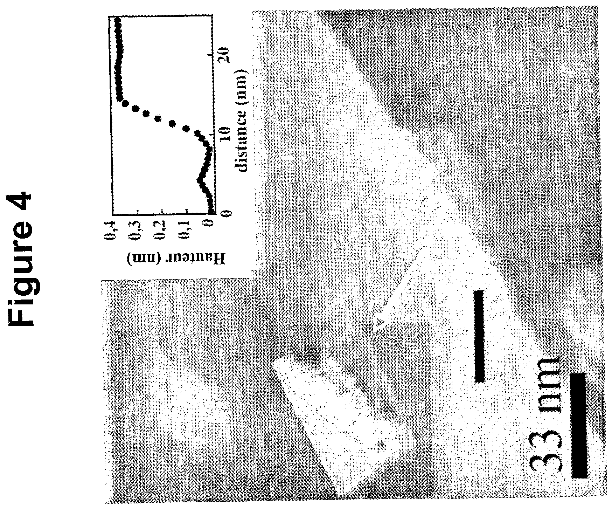

La Figure 4 représente une image de microscopie à effet tunnel (STM) du dépôt de graphène sur un substrat HOPG par dépôt et séchage d'une goutte (« drop-casting ») d'une solution de graphène réduit dans le NMP obtenue à partir de particules de graphite provenant du limage (« filing down » en anglais) d'une électrode de graphite, selon le procédé de l'invention. Comme indiqué sur la fenêtre en haut à droite de la Figure 4, la différence de hauteur entre la surface du HOPG et le plan de graphène est de 0,36 nm, ce qui corrrespond à la hauteur attendue, la distance interplans dans le graphite étant de 0.34 nm.

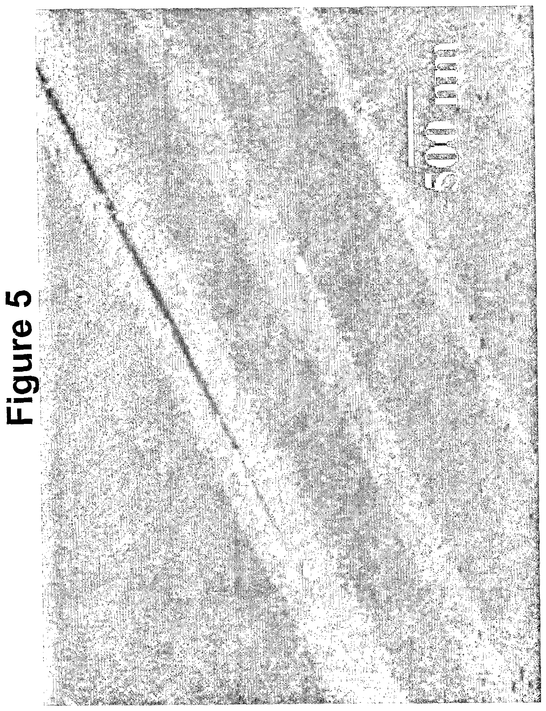

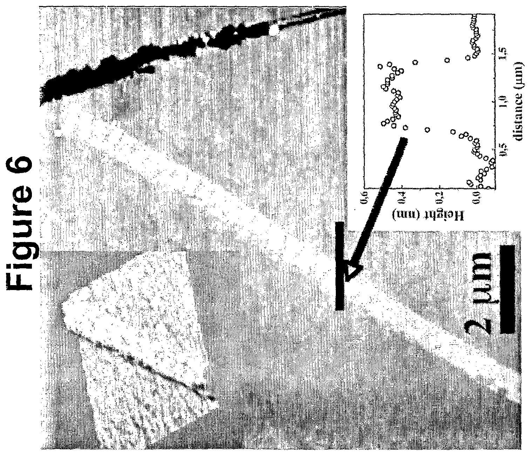

Il est à noter que le procédé de l'invention permet non seulement d'obtenir des plans de graphène isolés, comme discuté ci-dessus, mais aussi des rubans de graphène, comme mis en évidence sur les figures 5 et 6. Ces rubans peuvent avoir une taille de 20 à 100 microns de long et ≤ 1 micron de large. Par exemple, on peut obtenir des rubans ≤ 500 nm, ≤ 100 nm, ≤ 50 nm, voire ≤ 10 nm de large. Ces rubans, au même titre que les nanotubes de carbone et les plans de graphène, peuvent trouver des applications dans le domaine de l'électronique ou optoélectronique, particulièrement les rubans ≤ 10 nm de large. (Voir Hongjie Dai et al., Science, 319 : 1229-1232 (2008) [ref 45]).

La figure 5 représente une image de microscopie à force atomique (AFM) d'un dépôt de graphène obtenu par trempage d'une solution de graphène réduit dans le NMP sur un substrat Si/SiO₂ («Si/SiO₂ wafer» en anglais) selon l'Exemple 5. La solution de graphène réduit a été obtenue à partir de graphite expansé selon le procédé de l'invention. Sur cette figure, on peut distinguer trois rubans de graphène parallèles d'épaisseur moyenne de 1,2 nm environ (mesures de hauteur comprises entre 0,8 et 1,3 nm).

La figure 6 représente une image de microscopie à force atomique (AFM) d'un dépôt de graphène obtenu par trempage d'une solution de graphène réduit dans le NMP sur mica à surface modifée au nickel (voir Exemple 5). La solution de graphène réduit a été obtenue à partir de graphite expansé selon le procédé de l'invention. Sur cette figure, on peut distinguer l'extrémité d'un ruban de graphène similaire à ceux observés en figure 5. L'objet en entier a pu être suivi sur sa longueur qui est d'environ 40 microns. On note que la hauteur mesurée de ce ruban de graphène déposé sur mica est d'environ 0,4 nm, ce qui est de l'ordre de l'épaisseur théorique d'un plan de graphène.

Un plan de graphène, isolé, dans un environnement symétrique tel qu'une solution, est intrinsèquement instable.

Par « environnement symétrique », on entend que les deux faces du plan de graphène sont « équivalentes » en ce qu'elles "voient" la même chose. Par contraste, un plan de graphène déposé sur un substrat a deux faces inéquivalentes: l'une est en contact avec le substrat, l'autre est en contact avec le fluide (gaz ou solution) au-dessus ou avec le vide si l'ensemble est sous vide.

Ainsi, sous l'action des forces de van der Waals, le plan de graphène se courbe spontanément pour conduire à des « nanoscrolls » ou nanotubes de carbone en spirale. (Viculis et al., «A chemical route to carbon nanoscrolls », Science, 299, 1361 (2003) [ref 37]) Après réduction avec le potassium, les plans graphitiques sont chargés négativement, ce qui empêche la courbure du fait des répulsions électrostatiques. Si on laisse se réoxyder les solutions, les plans de graphène perdent leur charge électrique et reviennent à l'état neutre. La forme plane est alors un équilibre instable qui se rompt spontanément au profit d'une forme enroulée (les « nanoscrolls »). Ainsi, une fois déposés sur un substrat, les plans graphéniques peuvent être réoxydés et revenir à l'état neutre : ils sont stabilisés par interaction avec la surface (comme dans le cas de l'exfoliation mécanique [ref 18 et 19]).

Les photos de STM sont conclusives de ce point de vue (Figures 3 et 4) : on observe beaucoup d'objets dont l'épaisseur est exactement celle attendue pour un seul plan graphénique (0.34 nm par référence à l'espacement interplan du graphite). Quelques objets plus épais montrent des épaisseurs doubles (0.7 nm) ou triples (1.05 nm), correspondant respectivement à deux ou trois plans graphitiques (Figure 3).

Pour résumer, les charges négatives sur les plans de graphène empêchent l'enroulement des plans sur eux-mêmes, du fait des répulsions électrostatiques. Ainsi, les solutions de graphène susceptibles d'être obtenues par le procédé de la présente invention sont stables. La communauté scientifique et industrielle disposera donc avec ces solutions, non plus de quelques plans isolés sur une surface, mais d'une quantité illimitée de plans de graphène dissous dans un solvant adéquat (par exemple la NMP).

Si au contraire, les solutions sont exposées à l'air, les plans de graphène se réoxydent, redeviennent neutres et conduisent à l'obtention de nanotubes multiparois par enroulement des plans (« nanoscrolls »).

Le procédé de la présente invention conduit donc de manière très avantageuse à l'obtention, à notre connaissance pour la première fois, de véritables solutions de plans de graphène isolés et/ou de rubans de graphène isolés.

Ces solutions ont un potentiel extraordinaire au vu de l'intense activité de recherche mondiale qui existe sur le sujet du graphène depuis 2004 (Novoselov et al., « Electric field effect in atomically thin carbon films », Science 306, 666 (2004) [ref 22]). La méthode de Novesolov *et al.* consiste en effet à obtenir quelques plans de graphène sur une surface par un procédé original de cisaillement du graphite, ces plans étant stabilisés sur une surface, ce qui rend difficile leur manipulation ultérieure, leur intégration à une matrice par exemple.

En revanche, comme l'homme du métier peut le constater à la lecture de la présente description, un des principaux avantages de la présente invention est la simplicité de mise en oeuvre du procédé, ainsi que son habilité à fournir, au contraire, des quantités illimitées de plans de graphène réduit. Ces plans de graphène ont en outre la particularité qu'ils peuvent être obtenus sous forme chargée. Ainsi, ces feuillets de graphène se repoussent et ne peuvent s'agréger. Ils sont donc stables en solution, selon le procédé de l'invention.

Il convient également de noter que le graphène, à l'instar des nanotubes de carbone, possède des propriétés extraordinaires (en termes de conductivités thermique et électrique, ainsi que de propriétés mécaniques). D'un point de vue électrique, l'électricité circule très rapidement dans du graphène. Donc outre le gain en termes de place, cela pourrait aussi induire un gain en termes de réactivité des transistors. Ainsi, si l'on couple les transistors au graphène aux interconnexions en nanotubes de carbone, le domaine de l'informatique en tirera des bénéfices remarquables.

La disponibilité du graphite à très faible coût comme précurseur du graphène promet des matériaux composites performants à bien meilleur marché que ceux utilisant les nanotubes de carbone aujourd'hui.

D'autre part, dans un deuxième aspect, la réoxydation des plans de graphène obtenus par le procédé de l'invention conduit à des nanotubes de carbone multifeuillets de type « nanoscrolls » (enroulés en spirale). Du point de vue des nanotubes multiparois nanoscrolls, il existe aujourd'hui un gros effort de synthèse (Arkema, Bayer, Thomas Swan Inc., Nanocyl, etc....). Les solutions de graphène décrites dans la présente demande offriraient une alternative de qualité (sans impuretés) et à faible coût, permettant l'essor d'applications en gros volumes concernant les nanotubes de carbone multiparois.

Du côté de la synthèse des nanotubes multiparois nanoscrolls, il y a clairement un grand intérêt industriel à être capable de préparer des nanotubes à faible coût et *sans impuretés,* le graphite étant au départ très pur. La portée des applications envisageables de la présente invention serait l'ensemble des applications possibles avec les nanotubes de carbone multiparois.

Ainsi, comme l'homme du métier pourra apprécier à la lecture de la présente, beaucoup d'applications des solutions de graphène, et/ou des monofeuillets de graphène, obtenus selon le procédé de l'invention auront trait à celles que l'on envisage aussi pour les nanotubes de carbone où le coût reste encore aujourd'hui très élevé.

Par exemple, à l'instar des nanotubes de carbone, les solutions de graphène, et/ou des monofeuillets de graphène, obtenus selon le procédé de l'invention peuvent être utilisés dans les matériaux composites, les piles à hydrogène, les supercondensateurs, les capteurs, la catalyse, les NEMS (« nanoelectrochemical systems ») et les composants/systèmes électroniques de taille nanométrique.

Pour ce qui est des capteurs et le traitement du signal en général, le graphène peut présenter un atout considérable à cause de ses propriétés électroniques uniques, comme en atteste l'article de Schedin et al., « Détection of individual gas molecules adsorbed on graphene », publié le 29 juillet 2007 dans le journal Nature [ref 44]. Ainsi, l'utilisation dans des capteurs du graphène susceptible d'être obtenu par le présent procédé étend donc la portée d'application du présent procédé à des domaines aussi variés que le transport, le nucléaire ou la santé, où les capteurs sont fortement utilisés.

Les matériaux nanostructuraux, tels que les nanotubes de carbone, ont d'importantes applications dans les matériaux de renfort. L'un des objectifs des matériaux composites est de développer des matériaux très résistants et très légers, qui peuvent remplacer l'acier (Dai, L.; Mau, A. W. H. "Controlled Synthesis Of Modification Of Carbon Nanotubes and C60: Carbon Nanostructures For Advanced Polymeric Composite Materials", Adv. Mater., 13, pp 899-913 (2001) [ref 38]). Le point faible de tout matériau composite est la matrice polymère elle-même. L'idée de base des matériaux composites est de consolider la matrice polymère, tout en maintenant ses propriétés de matériau ultraléger. L'imprégnation de la matrice polymère avec un nanomatériau permet de transférer la charge de la matrice au nanomatériau (Calvert, P. "A Recipe For Strength". Nature, 399, pp 210-211 (1999) [ref 39]). Les technologies existantes utilisent des fibres de carbone macroscopiques où les cristallites de graphite sont orientées dans le sens des fibres, les fibres étant encastrée dans la matrice polymère (Lake, M. L.; Ting, J.-M. "Vapor Grown Carbon Fiber Composites", Carbon Mater. Adv. Technol. pp 139-167 (1999) [ref 40]). Une des limitations de cette technique est qu'à mesure que la résistance du matériau composite augmente, sa ductilité est sacrifiée du fait d'un manque de flexibilité. Du fait de la haute flexibilité des plans de graphène, l'utilisation de plans de graphènes susceptibles d'être obtenus par le procédé de l'invention dans des matériaux nanocomposites permettraient d'augmenter la résistance de ces matériaux composites sans sacrifier, ou du moins en affectant de façon moindre, leur flexibilité.

Des composites à base de graphite ont fait l'objet d'études. Il s'agit de composites obtenus par dispersion de graphite oxydé puis re-réduit dans des polymères. (Stankovitch et al., « Graphene based composite materials », Nature, 442, 282-286 (2006) [ref 31]). Les auteurs ont obtenu des composites avec déjà de très bonnes performances en conductivité électrique et thermique. Cependant, les plans de graphène obtenus/utilisés par Stankovich et coll. sont très abîmés par le processus d'oxydation. En revanche, le procédé de l'invention, consistant simplement à rajouter des électrons sur les plans de graphène, respecte et conserve l'intégrité structurale des plans de graphène tels qu'ils étaient dans le graphite.

De plus, le graphite étant disponible en grande quantité, pur et à bas coût, le procédé décrit dans la présente demande permet d'envisager, à bas coût, des composites par mélange de ces solutions de graphène avec des polymères. Comme évoqué précédemment, ces composites ont un fort potentiel comme renfort mécanique du fait des propriétés mécaniques extraordinaires du plan de graphène (le module deYoung des nanotubes de carbone n'est autre que celui du graphène).

On peut également penser notamment à des composites auto diagnostisants où le renfort (= le graphène) servirait aussi de sonde de température, pression, effort, environnement chimique, etc.... Ces composites pourraient ainsi être d'une grande utilité dans des domaines sensibles tels que l'aéronautique ou le spatial.

D'autres avantages pourront encore apparaître à l'homme du métier à la lecture des exemples ci-dessous, illustrés par les figures annexées, donnés à titre illustratif.

### Brève description des figures

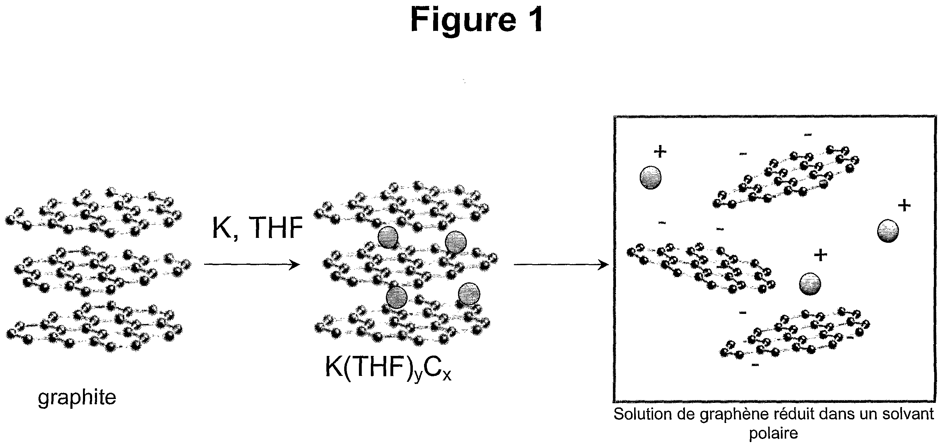

- La Figure 1 illustre de manière schématique un mode de réalisation de l'invention. Dans l'exemple illustré, le graphite est réduit par un composé du potassium (par exemple un sel de naphtalène de potassium) en présence de THF pour conduire à un composé d'intercalation du graphite. Ce dernier est isolé, par exemple par filtration, et est dissout dans un solvant polaire aprotique comme la NMP pour former une solution de graphène réduit.

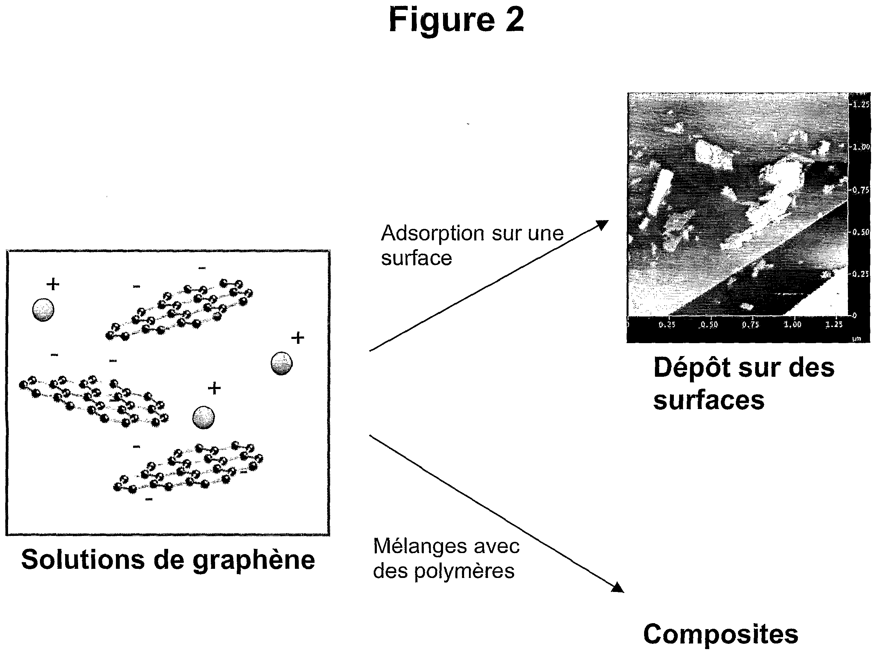

- La Figure 2 représente deux voies d'applications possibles parmi d'autre des solutions de graphène réduit de la présente demande : (i) le dépôt de plans de graphène sur un substrat, et (ii) l'incorporation desdits plans de graphène dans un polymère ou un mélange de polymères pour la préparation de matériaux composites.
- La Figure 3 représente une image de microscopie à effet tunnel (basse résolution) du dépôt obtenu par séchage de la solution de K(THF)_{y}Cₓ dans le NMP. Le substrat est du graphite HOPG (highly oriented pyrolytic graphite) ; la solution de NMP a été dilué 2 fois avec de l'acétone. La hauteur de la grande plaquette par rapport au substrat est de 0.35 nanomètres.
- La Figure 4 représente une image de microscopie à effet tunnel (STM) du dépôt de graphène sur un substrat HOPG par dépôt et séchage d'une goutte (« drop-casting ») d'une solution de graphène réduit dans le NMP obtenue à partir de particules de graphite d'une électrode de graphite selon le procédé de l'invention.
- La Figure 5 représente une image de microscopie à force atomique (AFM) d'un dépôt de graphène obtenu par trempage d'une solution de graphène réduit dans le NMP sur un substrat Si/SiO₂ («Si/SiO₂ wafer»).
- La Figure 6 représente une image de microscopie à force atomique (AFM) d'un dépôt de graphène obtenu par trempage d'une solution de graphène réduit dans le NMP sur mica à surface modifée au nickel.

### EXEMPLES

Sauf indication contraire, toutes les expérimentations sont effectuées sous atmosphère inerte, par exemple sous argon ou azote. En particulier, les manipulations sont effectuées en boîte à gants sous atmosphère d'argon sec (teneur en O₂ < 10 ppm, teneur en H₂O < 10 ppm)

### Exemple 1 : Préparation d'une solution d'un sel de potassium de graphène à partir de graphite expansé

### Préparation d'un sel de potassium de naphtalène (Naph⁻ K⁺)

39 mg de potassium en petits morceaux de surface brillante (épluchés au scalpel juste avant utilisation) et 133 mg de naphtalène (∼ 1 mmol), soit dans un ratio molaire d'environ 1:1, ont été placés dans environ 100 cc de THF distillé sous agitation mécanique. La solution a été chauffée au reflux jusqu'à ce qu'elle prenne une couleur verte, puis vert sombre, et enfin noire après quelques minutes de reflux. Afin de s'assurer que la réaction était complète, la solution a été maintenue sous reflux pendant 24 heures.

La solution de Naph⁻ K⁺ a été refroidie à température ambiante, et a été filtrée pour retirer les éventuelles traces de potassium solide de la solution.

### Préparation d'un composé ternaire K(THF)_{y}Cₓ

On a fait réagir 55.833 gr de la solution de Naph⁻ K⁺ obtenue ci-dessus (contenant 0.529 mmol de K) avec 50.8 mg (4.233 mmol) de graphite expansé (dans un ratio molaire de 8/1). La réaction a été maintenue à température ambiante sous agitation mécanique pendant une nuit, après quoi le mélange a été filtré in vacuo pour récupérer le matériau carboné. Celui-ci a ensuite été rincé avec du THF purifié et a été séché complètement. Le THF a été purifié sur colonnes, dans la boîte à gants (équivalent à du solvant distillé).

### Préparation d'une solution de graphène réduit dans de la NMP

5,7 mg du composé ternaire obtenu ci-dessus a été dissous dans 2 g de NMP désoxygéné. La dissolution du composé ternaire dans le solvant a été effectuée à température ambiante sous agitation mécanique. Après plusieurs heures, la solution a déjà pris une teinte colorée (en l'occurrence une couleur rouge). Cependant, on a laissé la réaction de dissolution se faire pendant 24 heures avant de centrifuger la solution pour séparer la fraction insoluble (conditions de centrifugation: 2800 g, 60 minutes). Après décantation, on a obtenu une solution homogène de graphite réduit, c'est-à-dire ne comprenant pas d'agrégats visibles à l'oeil.

Dans cet exemple, la solution de graphène réduit dans la NMP était rouge, puis elle est devenue jaune au contact de l'air.

### Exemple 2 : Préparation d'une solution d'un sel de potassium de graphène à partir de HOPG (Highly oriented pyrolytic graphite)

Des conditions et protocoles similaires à ceux de l'Exemple 1 sont utilisés, à la différence que le graphite de départ est du HOPG (Highly oriented pyrolytic graphite).

### Exemple 3 : Préparation d'une solution d'un sel de potassium de graphène à partir de graphite micrométrique obtenu par usure mécanique

Des conditions et protocoles similaires à ceux de l'Exemple 1 sont utilisés, à la différence que le graphite de départ est du graphite de granulométrie voisine du micron, obtenu par usure mécanique (e.g., par limage d'une électrode de graphite).

### Exemple 4 : Préparation d'une solution d'un sel de potassium de graphène à partir de graphite naturel

Des conditions et protocoles similaires à ceux de l'Exemple 1 sont utilisés, à la différence que le graphite de départ est du graphite naturel (de la société Nacional de Grafite au Brésil).

### Exemple 5 : Dépôt de graphène sur substrats HOPG, mica, et Si/SiO₂

### a) Préparation du composé ternaire d'intercalation du graphite

Différentes expériences ont été réalisées à partir de poudre de graphite de sources différentes. Pour chaque expérience, le protocole suivant a été utilisé :
De la poudre de graphite a été mélangée à une solution de potassium de naphtalène dans du THF, en utilisant un ratio molaire C/K=8, selon le protocole expérimental publié par Pénicaud et al. , J. Am. Chem. Soc. 127, 8-9 (2005) [ref 32]. Le mélange réactionnel a été maintenu sous agitation mécanique en atmosphère inerte. Après 24 heures, le mélange a été filtré in vacuo sur membrane PVDF (0,45 microns) pour récupérer le matériau carboné. Celui-ci a ensuite été rincé avec du THF purifié et a été séché complètement.

Les types de graphites utilisés sont les suivants :
- HOPG
- graphite naturel
- graphite expansé
- particules de graphite obtenues par limage (« filing down ») d'une électrode de graphite.

### b) Préparation et analyse de la solution de graphène réduit dans de la NMP

Le composé ternaire obtenu en a) ci-dessus a été dissous dans de la NMP (ca. 0,5 mg/ml) sous atmosphère inerte, à température ambiante et sous agitation. Après 24 heures, la solution a été centrifugée à 4000 tours par minute pendant 60 minutes pour séparer le matériau non-soluble de la solution de sel de graphite. La phase supérieure colorée représente la solution de graphène réduit dans la NMP. Cette solution est devenue incolore après exposition avec l'air.

Analyse élémentaire des diverses solutions (i.e., à partir de sources de graphite différentes): La teneur en potassium a été déterminée sur un spectromètre d'absorption atomic (« AAS ») et d'émission de flamme Perkin Elmer 3100, en utilisant une méthode de calibration linéaire. La marge d'erreur associée à ce type d'analyse est estimée à 5%. L'analyse élémentaire des solutions a révélé une teneur en potassium de 36 ppm (± 10% écart type). Si l'on considère la formule K(THF)ₓC₂₄ (x = 1 à 3), la concentration totale de carbone graphénique dissous peut atteindre 0,26 mgC/ml, ce qui se traduit par 0,36 à 0,49 mg/ml de matériau dissous selon la valeur de x.

Si les solutions de graphène sont exposées à l'air, celles-ci deviennent incolores après environ 2 jours.

L'analyse des solutions par microscopie optique n'a révélé aucun aggrégat, tandis que les solutions oxydées ont révélé des aggrégats d'environ 20 microns en taille.

### c) Préparation et analyse de dépôts de la solution sur des substrats

Des dépôts de la solution obtenue en b) ci-dessus ont été réalisés sur différents types de substrat par trempage (« dip-coating ») du substrat dans la solution pendant environ 15 à 30 minutes sous atmosphère d'argon, puis rinçage avec de la NMP, de l'acétone, de l'eau et de l'isopropanol (toujours sous atmosphère d'argon). Les substrats ont été ensuite retirés de la boite à gants pour être séchés complètement sous vide à 200°C pendant 48 heures.
Les substrats utilisés sont les suivants :
- SiO₂
- HOPG (« Highly oriented pyrolytic graphite »)
- Mica de type muscovite à surface modifée au nickel
- Substrat Si/SiO₂ (« Wafer Si/SiO₂ » en anglais), (« Surfs », Nanolane, France)
Aucun signal d'azote n'est détecté par analse XPS des dépôts effectués sur SiO₂ ou HOPG, ce qui implique que tout le NMP a été éliminé par la procédure de rinçage. Aucun potassium n'a pu être détecté. Par analogie avec C₆₀ et les nanotubes, on suppose que les ions potassium forment des oxides ou hydroxides une fois exposés à l'air ambient, lesquels sont également éliminés lors de la procédure de rinçage.
Les dépôts de graphène ont été caractérisés par microscopie à force atomique («atomic force microscopy, AFM»), microscopie à effet tunnel («ambient scanning tunneling microscopy, STM »), interférométrie (« multiple beam interferometry, MBI »), microscopie optique, spectroscopie de photoélectrons X (« X-ray photoelectron spectroscopy, XPS »), microscopie à transmission électronique haute résolution (« high resolution transmission electron microscopy, HRTEM ») et spectroscopie Raman. Chacune des techniques précitées ont mis en évidence le dépôt de plans de graphène sur les substrats analysés.
Des études préliminaires de conductivité ont été réalisées sur des électrodes interdigitées (« interdigitated ») trempées (« dip-coated ») dans les solutions préparées ci-dessus. Les courbes I-V à température ambiante étaient linéaires, avec une résistance de 235 et 370 Ohms pour deux dispositifs différents. Ceci met en évidence la nature conductrice des dépôts.

Interférométrie : l'échantillon de graphène a été déposé par trempage (« dip-coating ») sur un morceau de mica de type muscovite fraichement clivé et d'épaisseur uniforme inférieure à 4 mm, lequel morceau de mica de type muscovite a été préalablement recouvert d'une couche d'argent de 45 nm d'épaisseur (Sigma-Aldrich 99.9999%) par évaporation thermique. Pour favoriser l'adsorption des plans de graphène chargés négativement, la surface de mica a été préalablement immergée pendant 30 minutes dans une solution aqueuse 100 mM de NiCl₂ puis séchée de façon à promouvoir l'échange ionique des ions Ni²⁺ avec les ions potassium présents sur les faces exfoliées des feuillets de graphène réduit, polarisant ainsi positivement la surface de mica. [ref 46] Le dépôt mica-graphène a ensuite été recouvert d'une seconde couche semi-réfléchissante d'argent par évaporation thermique.
AFM. Les dépôts ont été effectués de la même manière que ci-dessous, en omettant les étapes de dépôt des couches d'argent, et ont été visualisés sur un microscope AFM multimode (Veeco) en mode contact intermittent (« tapping mode» en anglais).

Microscopie à effet tunnel: Les dépôts ont été faits sur du HOPG fraichement clivé, par dépôt et séchage d'une goutte (« drop-casting »). La surface du substrat HOPG a été visualisée juste avant le dépôt pour s'assurer de sa qualité et propreté. Des images basse et haute résolution ont été obtenues sur des instruments Nanoscope III et II, respectivement.
Microscopie optique : Les dépôts ont été préparés par trempage sur des wafers spéciaux Si/SiO₂ ("Surfs", Nanolane, France).

### Exemple 6 : Dépôt de graphène sur substrat MoS₂

Une solution de graphène réduit dans de la NMP a été obtenue selon le protocole expérimental décrit en a) et b) de l'Exemple 5. Des dépôts de graphène ont ensuite été effectués par trempage (« dip-coating ») ou dépôt et séchage d'une goutte « drop-casting » de la solution de graphène réduit sur un support MoS₂.

À la lecture de la présente demande et des exemples illustratifs ci-dessus, l'homme du métier constatera que le présent procédé est général et qu'il est applicable avec tous les graphites.

### Listes des références

[1] Schaffer, M. S. P., Windle, A. H., "Fabrication and Characterization of Carbon Nanotube/poly (vinyl alcohol) Composites", Adv. Mater., 11, pp 937-941 (1999)
[2] Ye, Y., Ahn, C. C., Witham, C., Fultz, B., Liu, J., Rinzler, A. G., Colbert, D., Smith, K. A., Smalley, R. E., "Hydrogen Absorption And Cohesive Energy Of Single-Walled Carbon Nanotubes", App. Phys. Lett., 74, pp 307-2309 (1999)
[3] Liu, C., Fan, Y. Y., Liu, M., Cong, H. T., Cheng, H. M., Dresselhaus, M. S., "Hydrogen Storage In Single-Walled Carbon Nanotubes At Room Temperature", Science, 286, pp 1127-1129 (1999)
[4] Kong, J., Chapline, M. G., Dai, H., "Functionalized Carbon Nanotubes For Molecular Hydrogen Sensors", Adv. Mater. 13, 1384-1386 (2001)
[5] Aldissi, M.; Schmitz, B.; Lazaro, E.; Bhamidipati, M.; Dixon, B., "Conducting Polymers In Ultracapacitor Applications", 56.sup.th Annu. Tech. Conf.--Soc. Plast. Eng., (Vol. 2), pp 1197-1201 (1998)
[6] An, K. H.; Kim, W. S.; Park, Y. S.; Moon, J.-M.; Bae, D. J.; Lim, S. C.; Lee, Y. S.; Lee, Y. H. "Electrochemical Properties Of High-Power Supercapacitors Using Single-Walled Carbon Nanotube Electrodes", Adv. Funct. Mater. 11, pp 387-392 (2001)
[7] Yu, R., Chen, L., Liu, Q., Lin, J., Tan, K. -L., Ng, S. C., Chan, H. S. O., Xu, G.-Q.,Hor, T. S. A. "Platinum Déposition On Carbon Nanotubes Via Chemical Modification", Chem. Mater. 10, pp 718-722 (1998)
[8] Planeix, J. M.; Coustel, N.; Coq, B.; Brotons, V.; Kumbhar, P. S.; Dutartre, R.; Geneste, P.; Bernier, P.; Ajayan, P. M., "Application Of Carbon Nanotubes As Supports_in Heterogeneous Catalysis", J. Am. Chem. Soc. 116, pp 7935-7936 (1994)
[9] Tans, S. J., Verschueren, A. R. M., Dekker, C., "Room-Temperature Transistor Based On A Single Carbon Nanotube", Nature 393, pp 49-52 (1998)
[10] Bachtold, A.; Hadley, P.; Nakanishi, T.; Dekker, C., "Logic Circuits With Carbon Nanotube Transistors". Science 294 pp 1317-1320 (2001)
[11] Ijima, S. "Helical Microtubules of Graphitic Carbon." Nature, 354, 56-58 (1991)
[12] Ebbeson, T. W., Ajayan, P. M. "Large Scale Synthesis Of Carbon Nanotubes", Nature 358, pp 220-222 (1992)
[13] Saito et al., Chem. Phys. Lett., 1995, 236:419-426
[14] Thess, A.; Lee, R.; Nikolaev, P.; Dai, H.; Petit, P.; Robert, J.; Xu, C.; Lee, Y. H.; Kim, S. G.; Rinzler, A. G.; Colbert, D. T.; Scuseria, G. E.; Tomanek, D.; Fischer, J. E.;_Smalley, R. E., "Crystalline Ropes Of Metallic Carbon Nanotubes". Science 273, pp 483-487 (1996)
[15] Muradov et al., Int. J. Hydrogen Energy, 1993, 18:211-215
[16] Ishihara et al., Chem. Lett., 1995, 2:93-94
[17] Oger, G., "French Firm Hopes To Get PR Bounce Out Of Nanotubes In Tennis Rackets", Small Times, Nov. 7, 2001, http://www.smalltimes.com/articles/article_display.cfm?ARTICLE_ID=2676 37&p=109)
[18] Novoselov et al., « Electric field effect in atomically thin carbon films » , Science, 306, 666-669 (2004)
[19] Novoselov et al., « Two-dimensional gas of massless Dirac fermions in graphene », Nature, 438, 197 - 200 (2005)
[20] « Synthesis of graphite intercalation compounds », A. Hérold in Chemical physics of intercalation, A.P. Legrand et S. Flandrois Eds, NATO ASI Series, series B, Vol. 172, pp. 3-45 (1987)
[21] C. Stein, J. Poulenard, L. Bonnetain, J. Golé, C.R. Acad. Sci. Paris 260, 4503 (1965)
[22] Novoselov et al., « Electric field effect in atomically thin carbon films », Science 306, 666 (2004)
[23] Chakraborty et al., « Functionalization of potassium graphite », Angew. Chem. Int. Ed., 46, 4486-4488 (2007)
[24] Niyogi, S.; Bekyarova, E.; Itkis, M. E.; McWilliams, J. L.; Hamon, M. A.; Haddon, R. C., "Solution Properties of Graphite and Graphene", J. Am. Chem. Soc., 128, 7720-7721 (2006)
[25] McAllister, M. J.; Li, J.-L.; Adamson, D. H.; Schniepp, H. C.; Abdala, A. A.; Liu, J.; Herrera-Alonso, M.; Milius, D. L.; Car, R.; Prud'homme, R. K.; Aksay, I. A., "Single Sheet Functionalized Graphene by Oxidation and Thermal Expansion of Graphite", Chem. Mater., 2007; ASAP Article
[31] Stankovitch et al., « Graphene based composite materials », Nature, 442, 282-286 (2006)
[35] Bernal, J. D. , Proc. Roy. Soc., A, 106, 749, (1924)
[36] Freise, E.J. «Structure of graphite », Nature (London) 193, 671-672, (1962)
[37] Viculis et al., «A chemical route to carbon nanoscrolls », Science, 299, 1361 (2003)
[38] Dai, L.; Mau, A. W. H. "Controlied Synthesis Of Modification Of Carbon Nanotubes and C60: Carbon Nanostructures For Advanced Polymeric Composite Materials", Adv. Mater., 13, pp 899-913 (2001)
[39] Calvert, P. "A Recipe For Strength". Nature, 399, pp 210-211 (1999)
[40] Lake, M. L.; Ting, J.-M. "Vapor Grown Carbon Fiber Composites", Carbon Mater. Adv. Technol. pp 139-167 (1999)
[41] F. Béguin et R. Setton New ternary lamellar compounds of graphite, Carbon 13, 293-)295 (1975)
[44] Schedin et al., « Détection of individual gas molecules adsorbed on graphene », publié le 29 juillet 2007 dans le journal Nature
[45] Hongjie Dai et al., Science, 319 : 1229-1232 (2008)
[46] III, C. R., et al.. Biophys. J. 64, 919-924 (1993)

## Revendications

1. Procédé de solubilisation du graphite **caractérisé en ce qu'**il comprend les étapes suivantes réalisées sous atmosphère inerte :
a) Réduction du graphite par un métal alcalin pour conduire à un composé d'intercalation du graphite ; et
b) Exposition dudit composé d'intercalation du graphite à un solvant polaire aprotique pour conduire à une solution de graphène réduit, lequel solvant polaire aprotique a une constante diélectrique de 25 à 200.

2. Procédé selon la revendication 1, dans lequel le solvant polaire aprotique répond à la formule suivante : 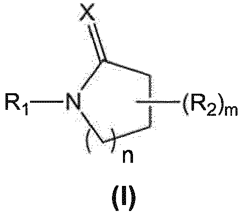
dans laquelle n et m sont indépendamment 1 ou 2;
X représente O ou S :
R₁ représente un groupe alkyle en C₁ à C₆ ou alkenyle en C₂ à C₆ linéaire ou ramifié, ou un groupe cycloalkyle en C₃ à C₆ ou cycloalkenyle en C₅ à C₆ ; et
R₂ représente H, un halogène, un groupe alkyle en C₁ à C₆ ou alkenyle en C₂ à C₆ linéaire ou ramifié, un groupe cycloalkyle en C₃ à C₆ ou cycloalkenyle en C₅ à C₆, ou un groupe -OR dans lequel R représente un groupe alkyle en C₁ à C₆ ou alkenyle en C₂ à C₆ linéaire ou ramifié, un groupe cycloalkyle en C₃ à C₆ ou cycloalkenyle en C₅ à C₆.

3. Procédé selon la revendication 1 ou 2, dans lequel le composé d'intercalation du graphite se présente sous la forme d'un composé binaire de formule KC₈.

4. Procédé selon la revendication 1, dans lequel le composé d'intercalation du graphite se présente sous la forme d'un composé ternaire de structure M(Solv)_{y}Cₓ dans laquelle M est un ion métallique alcalin, Solv est une molécule de solvant aprotique, x représente un nombre entier compris entre 6 et 200, et y représente un nombre entier compris entre 0 et 4.

5. Procédé selon la revendication 4, dans lequel le solvant aprotique est un solvant aromatique ou nucléophile.

6. Procédé selon la revendication 5, dans lequel le solvant aromatique est le benzène ou le toluène.

7. Procédé selon la revendication 5, dans lequel le solvant nucléophile est le THF.

8. Procédé selon l'une quelconque des revendications 1 à 5, dans lequel l'étape de réduction a) se fait en présence d'un solvant nucléophile.

9. Procédé selon la revendication 8, dans lequel le solvant nucléophile est un solvant aprotique dont la structure contient au moins un atome d'oxygène.

10. Procédé selon la revendication 9, dans lequel le solvant aprotique est le THF.

11. Procédé selon la revendication 1 ou 4, dans lequel le métal alcalin est le potassium, le solvant est le THF et le composé d'intercalation du graphite est un composé ternaire de structure K(THF)yCx dans laquelle x représente un nombre entier compris entre 6 et 200, et y représente un nombre entier compris entre 0 et 4.

12. Procédé selon la revendication 1, dans lequel l'étape de réduction a) est choisie dans le groupe comprenant la réduction par un métal alcalin en phase vapeur suivie d'une exposition à un solvant aprotique dont la structure contient au moins un atome d'oxygène, la réduction électrochimique et la réduction par un sel polyaryl alcalin dans un solvant aprotique.

13. Procédé selon l'une quelconque des revendications 1 à 10, dans lequel l'étape de réduction a) comprend l'addition au graphite, sous atmosphère inerte, d'un sel polyaryl alcalin de formule A⁺B⁻, dans laquelle :
A⁺ représente un cation d'un ion alcalin, et
B⁻ représente un anion d'un composé polyaromatique.

14. Procédé selon la revendication 13, dans lequel le composé polyaromatique est choisi dans le groupe comprenant le naphtalène, la benzophénone, la fluorénone, la benzoquinone et l'anthraquinone.

15. Procédé selon la revendication 14, dans lequel le solvant polaire aprotique est la N-méthylpyrrolidone.

16. Procédé selon l'une quelconque des revendications 1 à 15, dans lequel l'étape de mélange b) est effectuée à une température de -22 à 202 °C.

17. Procédé selon la revendication 16, dans lequel l'étape de mélange b) est effectuée à une température de 20 à 25°C.

18. Procédé selon l'une quelconque des revendications 1 à 17, dans lequel l'étape de mélange b) se fait sous agitation mécanique, magnétique ou par sonication, ou sans agitation.

19. Procédé selon l'une quelconque des revendications 1 à 18, comprenant en outre une étape de centrifugation.

20. Solution de graphène réduit susceptible d'être obtenu par un procédé selon l'une quelconque des revendications 1 à 19.

21. Procédé selon l'une quelconque des revendications 1 à 19, comprenant en outre une étape d'évaporation du solvant polaire aprotique.

## Patentansprüche

1. Verfahren zur Solubilisierung von Graphit **dadurch gekennzeichnet, dass** es die folgenden Schritte umfasst, die in einer inerten Atmosphäre durchgeführt werden:
a) Graphitreduktion durch ein Alkalimetall um eine Graphit-Einlagerung zu erhalten; und
b) Einwirken eines polaren aprotischen Lösungsmittels auf die Graphit-Einlagerung, um eine Lösung mit reduziertem Graphen zu erhalten, wobei das aprotische polare Lösungsmittel eine Dielektrizitätskonstante von 25 bis 200 aufweist.

2. Verfahren nach Anspruch 1, wobei das polare aprotische Lösungsmittel folgender Formel entspricht: 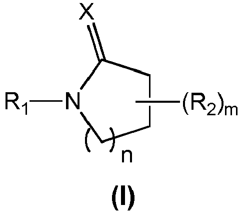
in der n und m voneinander unabhängig 1 oder 2 sind;
X für O oder S steht:
R₁ für eine lineare oder verzweigte Alkyl- in C₁ bis C₆ oder Alkenyl-Gruppe in C₂ bis C₆, oder eine Cycloalkyl- in C₃ bis C₆ oder ein Cycloalkenyl-Gruppe in C₅ bis C₆ steht; und
R₂ für H, ein Halogen, eine lineare oder verzweigte Alkyl- in C₁ bis C₆ oder Alkenyl-Gruppe in C₂ bis C₆, eine Cycloalkyl- in C₃ bis C₆ oder Cycloalkenyl-Gruppe in C₅ bis C₆, oder eine -OR-Gruppe, in der R für eine lineare oder verzweigte Alkyl- in C₁ bis C₆ oder Alkenyl-Gruppe in C₂ bis C₆, oder eine Cycloalkyl- in C₃ bis C₆ oder eine Cycloalkenyl-Gruppe in C₅ bis C₆ steht.

3. Verfahren nach Anspruch 1 oder 2, wobei die Graphit-Einlagerung in Form einer binären Verbindung der Formel KC₈ vorliegt.

4. Verfahren nach Anspruch 1, wobei die Graphit-Einlagerung in Form einer ternären Verbindung der Struktur M(Solv)yCx vorliegt, worin M ein Alkalimetallion, Solv ein aprotisches Lösungsmittelmolekül ist, x für eine ganze Zahl zwischen 6 und 200 und y für eine ganze Zahl zwischen 0 und 4 steht.

5. Verfahren nach Anspruch 4, wobei das aprotische Lösungsmittel ein aromatisches oder nukleophiles Lösungsmittel ist.

6. Verfahren nach Anspruch 5, wobei das aromatische Lösungsmittel Benzol oder Toluol ist.

7. Verfahren nach Anspruch 5, wobei das nukleophile Lösungsmittel THF ist.

8. Verfahren nach einem der Ansprüche 1 bis 5, wobei der Reduktionsschritt a) in Gegenwart eines nukleophilen Lösungsmittels durchgeführt wird.

9. Verfahren nach Anspruch 8, wobei das nukleophile Lösungsmittel ein aprotisches Lösemittel ist, dessen Struktur mindestens ein Sauerstoffatom enthält.

10. Verfahren nach Anspruch 9, wobei das aprotische Lösungsmittel THF ist.

11. Verfahren nach Anspruch 1 oder 4, wobei das Alkalimetall Kalium, das Lösungsmittel THF und die GraphitEinlagerung eine ternäre Verbindung der Struktur K(THF)yCx ist, worin x für eine ganze Zahl zwischen 6 und 200 und y für eine ganze Zahl zwischen 0 und 4 steht.

12. Verfahren nach Anspruch 1, wobei der Reduktionsschritt a) aus der Gruppe ausgewählt wird, die die Reduktion durch ein Alkalimetall in der Gasphase mit anschliessendem Einwirken eines aprotischen Lösungsmittels, dessen Struktur mindestens ein Sauerstoffatom enthält, die elektrochemische Reduktion und die Reduktion mit einem Alkalipolyarylsalz in einem aprotischen Lösungsmittel umfasst.

13. Verfahren nach einem der Ansprüche 1 bis 10, wobei der Reduktionsschritt a) umfasst, dem Graphit in einer inerten Atmosphäre Alkalipolyarylsalz der Formel A⁺B⁻zuzugeben, wobei:
A⁺ für ein Kation eines Alkalimetallions, und
B⁻ für ein Anion einer polyaromatischen Verbindung steht.

14. Verfahren nach Anspruch 13, wobei die polyaromatische Verbindung aus der Gruppe ausgewählt ist, die Naphthalin, Benzophenon, Fluorenon, Benzochinon und Anthrachinon umfasst.

15. Verfahren nach Anspruch 14, wobei das polare aprotische Lösungsmittel N-Methylpyrrolidon ist.

16. Verfahren nach einem der Ansprüche 1 bis 15, wobei der Mischschritt b) bei einer Temperatur von -22 bis 202 °C durchgeführt wird.

17. Verfahren nach Anspruch 16, wobei der Mischschritt b) wird bei einer Temperatur von 20 bis 25 °C durchgeführt wird.

18. Verfahren nach einem der Ansprüche 1 bis 17, wobei der Mischschritt b) unter mechanischem, magnetischen Rühren oder durch Beschallung oder ohne Rühren durchgeführt wird.

19. Verfahren nach einem der Ansprüche 1 bis 18, ferner umfassend einen Zentrifugierschritt.

20. Lösung mit reduziertem Graphen, die durch ein Verfahren nach einem der Ansprüche 1 bis 19 erhalten werden kann.

21. Verfahren nach einem der Ansprüche 1 bis 19, ferner umfassend einen Verdampfungsschritt des polaren aprotischen Lösungsmittels.

## Claims

1. A process for solubilizing graphite, **characterized in that** it comprises the following steps, which are carried out under inert atmosphere:
a) Reduction of graphite by an alkali metal to lead to a graphite intercalation compound; and
b) Exposure of the graphite intercalation compound to a polar aprotic solvent to lead to a solution of reduced graphene, wherein the polar aprotic solvent has a dielectric constant from 25 to 200.

2. Process according to claim 1, wherein the polar aprotic solvent has the following formula: 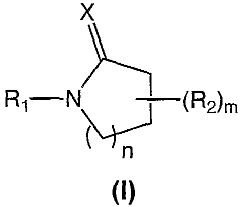
wherein n and m are independently 1 or 2;
X represents O or S:
R₁ represents a linear or branched C₁-C₆ alkyl or C₂-C₆ alkenyl group, or a C₃-C₆ cycloalkyl or C₅-C₆ cycloalkenyl group; and
R₂ represents H, a halogen atom, a linear or branched C₁-C₆ alkyl or C₂-C₆ alkenyl group, a C₃-C₆ cycloalkyl or C₅-C₆ cycloalkenyl group, or an -OR group wherein R represents a linear or branched C₁-C₆ alkyl or C₂-C₆ alkenyl group, a C₃-C₆ cycloalkyl or C₅-C₆ cycloalkenyl group.

3. Process according to claim 1 or 2, wherein the graphite intercalation compound is in the form of a binary compound having the formula KC₈.

4. Process according to claim 1, wherein the graphite intercalation compound is in the form of a ternary compound having the structure M(Solv)_{y}Cₓ, wherein M is an alkali metal ion, Solv is an aprotic solvent molecule, x represents an integer between 6 and 200, and y represents an integer between 0 and 4.

5. Process according to claim 4, wherein the aprotic solvent is an aromatic or a nucleophilic solvent.

6. Process according to claim 5, wherein the aromatic solvent is benzene or toluene.

7. Process according to claim 5, wherein the nucleophilic solvent is THF.

8. Process according to any one of claims 1 to 5, wherein the reduction step a) is carried out in the presence of a nucleophilic solvent.

9. Process according to claim 8, wherein the nucleophilic solvent is an aprotic solvent whose structure contains at least one oxygen atom.

10. Process according to claim 9, wherein the aprotic solvent is THF.

11. Process according to claim 1 or 4, wherein the alkali metal is potassium, the solvent is THF and the graphite intercalation compound is a ternary compound having the structure K(THF)_{y}Cₓ, wherein x represents an integer between 6 and 200, and y represents an integer between 0 and 4.

12. Process according to claim 1, wherein the reduction step a) is selected from the group comprising vapour-phase reduction by an alkali metal followed by exposure to an aprotic solvent whose structure contains at least one oxygen atom, electro-chemical reduction, and reduction by a polyaryl alkali salt in an aprotic solvent.

13. Process according to any one of claims 1 to 10, wherein the reduction step a) comprises the addition of a polyaryl alkali salt of formula A⁺B⁻ to graphite under inert atmosphere, wherein:
A⁺ represents a cation of an alkali ion, and
B⁻ represents an anion of a polyaromatic compound.

14. Process according to claim 13, wherein the polyaromatic compound is selected from the group comprising naphthalene, benzophenone, fluorenone, benzoquinone and anthraquinone.

15. Process according to claim 14, wherein the polar aprotic solvent is N-methylpyrrolidone.

16. Process according to any one of claims 1 to 15, wherein the mixing step b) is carried out at a temperature from -22 to 202°C.

17. Process according to claim 16, wherein the mixing step b) is carried out at a temperature from 20 to 25°C.

18. Process according to any one of claims 1 to 17, wherein the mixing step b) is carried out under mechanical or magnetic stirring or by sonication, or without stirring.

19. Process according to any one of claims 1 to 18, further comprising a centrifugation step.

20. A solution of reduced graphene obtainable by a process according to any one of claims 1 to 19.

21. Process according to any one of claims 1 to 19, further comprising a step of evaporation of the polar aprotic solvent.
